# EUROPÄISCHE PATENTSCHRIFT

(11) **EP 1 879 767 B1**
(45) Veröffentlichungstag und Bekanntmachung des Hinweises auf die Patenterteilung: **18.11.2009**
(21) Anmeldenummer: 06742307.9
(22) Anmeldetag: 03.05.2006
(51) Int. Cl.: B60K 15/05

(54) **VORRICHTUNG ZUM ZUGÄNGLICHMACHEN UND VERSCHLIESSEN EINER ÖFFNUNG IN EINER FAHRZEUGKAROSSERIE**
DEVICE FOR MAKING ACCESSIBLE AND CLOSING AN OPENING IN A VEHICLE BODY
DISPOSITIF POUR PERMETTRE L'ACCES A UNE OUVERTURE DANS LA CARROSSERIE D'UN VEHICULE ET LA VERROUILLER

(30) Priorität: 03.05.2005 DE 102005020982
(43) Veröffentlichungstag der Anmeldung: 23.01.2008
(73) Patentinhaber: SMR PATENTS S.à.r.l., 1653 Luxembourg (LU)
(72) Erfinder: BUSCH, Marcus, 31234 Edemissen (DE)
(74) Vertreter: Rausch, Gabriele
(86) Internationale Anmeldenummer: PCT/DE2006/000768
(87) Internationale Veröffentlichungsnummer: WO 2006/116991

(56) Entgegenhaltungen:
- EP-A- 1 449 702
- DE-A1- 4 425 838
- DE-A1- 4 440 814
- DE-A1- 19 935 454
- US-A- 5 066 062

## Beschreibung

Die Erfindung betrifft eine Vorrichtung zum Zugänglichmachen und Verschließen einer Öffnung in einer Fahrzeugkarosserie, insbesondere einer Tankmulde, mit einem Verschlussteil.

Aus dem Stand der Technik ist es bekannt, Tankmulden über eine verschwenkbar gelagerte Tankklappe zu verschließen. Diese verschwenkbaren Tankklappen benötigen einen gewissen Einbauraum, um an der Fahrzeugkarosserie befestigt zu werden. Darüber hinaus steht die Tankklappe beim Betanken offen, was dazu führen kann, dass die Tankklappe über die Fahrzeugkontur heraussteht, wenn das Schließen der Tankklappe vergessen wird. Die Einbausituation bei Tankstutzenanordnungen innerhalb der B-Säule kann zudem sehr beengt sein, so dass eine Scharnierlösung nicht in Frage kommt.
Aus der EP 1449702 ist eine Vorrichtung zum Verschließen einer Tankmulde bekannt. Hierin wird ein Verschlussteil mit Hilfe einer längsverschieblichen Hülse in zwei Verschieberichtungen bewegt. Allerdings weist die Vorrichtung keine Abdichtungsmöglichkeit auf.
Ausgehend von diesem Stand der Technik liegt der Erfindung die Aufgabe zugrunde, eine Vorrichtung zum Zugänglichmachen und Verschließen einer Öffnung in einer Fahrzeugkarosserie bereitzustellen, die die Nachteile des Standes der Technik vermeidet und mit der auch bei schwierigen Platzverhältnissen ein sicheres, dichtes Verschließen der Zugangsöffnung möglich ist.

Erfindungsgemäß wird diese Aufgabe durch eine Vorrichtung mit den Merkmalen des Anspruchs 1 gelöst, indem eine Verschiebeeinrichtung zum Verschieben des Verschlussteiles in einer ersten Verschieberichtung senkrecht zur Fahrzeugkarosserie vorgesehen ist, um das Verschlussteil, das im geschlossenen Zustand bündig mit der Fahrzeugkarosserie abschließt, aus dieser Ebene herauszufahren. Über die oder eine zweite Verschiebeeinrichtung wird das Verschlussteil in einer zweiten Verschieberichtung parallel zur Fahrzeugkarosserie und senkrecht zur ersten Verschieberichtung verfahren, so dass das im wesentlichen parallel zur Fahrzeugkarosserie befindliche, in der ersten Verschieberichtung herausgefahrene Verschlussteil parallel zur Fahrzeugkarosserie verfahren werden kann, verschieben, so dass das Verschlussteil im geöffneten Zustand sehr flach an der Fahrzeugkarosserie anliegt bzw. darüber hinaussteht. Weiterhin ist die gesamte Verschiebeeinrichtung über eine Dichtung beweglich angeordnet. Eine solche Vorrichtung ist auch bei schwierigen Platzverhältnissen anwendbar, wenn wenig Bauraum für Scharnier- und Verriegelungseinrichtungen einer Tankklappe zur Verfügung steht.

Die Verschiebeeinrichtung oder Verschiebeeinrichtungen können als Hubmagnet oder als Elektromotor ausgebildet sein, wobei die beiden Antriebe auch miteinander kombiniert eingesetzt werden können, also dass die erste Verschiebeeinrichtung als Hubmagnet und die zweite Verschiebeeinrichtung als Elektromotor ausgebildet ist. Neben einem motorischen oder elektromagnetischen Antrieb ist es vorgesehen, die Verschiebeeinrichtungen manuell antreiben zu können, damit bei Ausfall der Energieversorgung eine Notbetätigung möglich ist.

Eine Weiterbildung der Erfindung sieht vor, dass die zweite Verschiebeeinrichtung als Elektromotor ausgebildet ist, der mit dem Verschlussteil über eine Spindel gekoppelt ist. Dadurch ist es möglich, größere Freiheiten hinsichtlich der Anordnung der Verschiebeeinrichtungen im Verhältnis zu dem Verschlussteil vorzusehen. Durch eine verschieden lange Ausbildung der Spindel kann der Motor oder die Kurbel zur Betätigung der Spindel an nahezu beliebigen Stellen in der Karosserie angeordnet werden. Alternativ zu der Ausbildung als eine Spindel kann der Motor auch über eine biegsame Welle oder eine andere, geeignete Kraftübertragungseinrichtung mit dem Verschlussteil gekoppelt sein.

Vorteilhaftenrveise ist die zweite Verschiebeeinrichtung mit der ersten Verschiebeeinrichtung dergestalt gekoppelt, dass die zweite Verschiebeeinrichtung senkrecht zu der Fahrzeugkarosserie bewegt wird. Dies hat den Vorteil, dass die zweite Verschiebeeinrichtung bezüglich der ersten Verschiebeeinrichtung starr mit dem Verschlussteil verbunden sein kann, also dass das Verschlussteil zusammen mit der zweiten Verschiebeeinrichtung aus der Ebene der Fahrzeugkarosserie heraus bewegt wird. Das Verschlussteil und die zweite Verschiebeeinrichtung bilden somit eine Baugruppe, die in erster Verschieberichtung verlagerbar ist.

Um den Einbau der Vorrichtung zum Zugänglichmachen oder Verschließen der Öffnung zu erleichtern, ist es vorgesehen, die Verschiebeeinrichtung oder die Verschiebeeinrichtungen als ein gemeinsames Modul auszubilden, insbesondere als ein gekapseltes Modul, um so die beweglichen, mechanischen und elektrischen bzw. elektronischen Bauteile vor der Umgebung außerhalb der Fahrzeugkarosserie zu schützen. Für den Fall der Ausgestaltung als eine Tankklappe ist es vorgesehen, dass keine unabgedichtete Verbindung zwischen der Tankmulde und den Verschiebeeinrichtungen besteht.

In einer Ausführungsform der Erfindung ist es vorgesehen, dass das Verschlussteil über eine längsverschiebliche, drehfeste Hülse mit einer drehbar befestigten, insbesondere motorisch angetriebenen Spindel oder biegsamen Welle gekoppelt ist. Die Hülse hat den Vorteil, dass aufgrund des Innengewindes eine Umwandlung einer Drehbewegung in eine längsgerichtete Bewegung ermöglicht wird. Darüber hinaus dient die Hülse als Abdeckung der Spindel oder der Antriebswelle. Um ein Mitdrehen der Hülse zu vermeiden, ist diese über eine Führungsnut oder eine Führungsfläche an der Außenseite der Hülse drehfest, jedoch längsverschieblich, gelagert.

Damit das Verschlussteil parallel zu der Fahrzeugkarosserie entlanggleiten kann, ist das Verschlussteil über einen Steg an der Hülse befestigt, um so einen Zwischenraum zwischen der Hülse und dem Verschlussteil bereitzustellen, in den die Fahrzeugkarosserie bzw. das Außenblech eindringen kann.

Die Spindel oder die Welle ist vorzugsweise in einem Gehäuse gelagert, das gemeinsam mit der Hülse in der ersten Verschieberichtung verschiebbar ist. Das Gehäuse dient einerseits zur Lagerung und Führung sowohl der Spindel als auch der Hülse, andererseits zur Abdichtung und Modulbildung gegenüber Umwelteinflüssen. Zwischen dem Gehäuse und der Hülse ist eine Dichtung vorgesehen, ebenso ist eine Dichtung zwischen dem Gehäuse und der Tankmulde vorgesehen, wobei die letztere Dichtung die Bewegung des Gehäuses in der ersten Verschieberichtung ermöglicht. Die Dichtungen dienen zum Schutz der Vorrichtung gegenüber äußeren Einflüssen und Verschmutzung.

Um eine leichte Verschiebbarkeit der zweiten Verschiebeeinrichtung entlang der ersten Verschieberichtung zu ermöglichen, ist die gesamte zweite Verschiebeeinrichtung auf einem Schlitten gleitbar oder rollbar gelagert. Der Schlitten ist dabei so ausgerichtet, dass die zweite Verschiebeeinrichtung senkrecht von der Fahrzeugkarosserie weg oder senkrecht auf das Fahrzeug zu bewegt wird.

Nachfolgend wird ein Ausführungsbeispiel der Erfindung anhand der beigefügten Figuren näher erläutert: Es zeigen:
- Figur 1 -: eine schematische Darstellung der Vorrichtung; sowie
- Figuren 2a und 2b -: Varianten einer Verdrehsicherung.

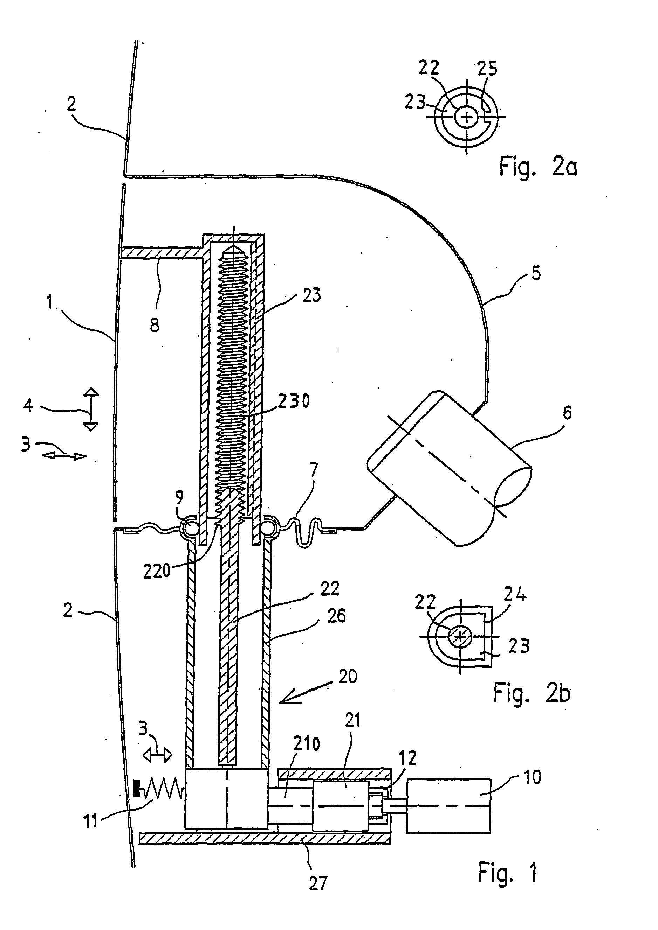

Figur 1 zeigt schematisch einen Schnitt durch ein Kraftfahrzeug im Bereich eines Tankeinfüllstutzens 6, der in einer Tankmulde 5 angeordnet ist, die durch ein Verschlussteil 1 verschlossen ist. Das Verschlussteil 1 schließt in der dargestellten, geschlossenen Stillung im Wesentlichen bündig mit der Fahrzeugkarosserie 2 ab. Um den Tankstutzen 6 zum Betanken zugänglich zu machen, wird das Verschlussteil 1, vorliegend die Tankklappe, zunächst in einer ersten Verschieberichtung 3 in Richtung von der Fahrzeugkarosserie 2 weg bewegt, um anschließend in die zweite Verschieberichtung 4 nach unten verfahren zu werden. Durch die zweistufig, gegebenenfalls überlagerte Bewegung von der Fahrzeugkarosserie 2 weg und parallel zu der Fahrzeugkarosserie 2 nach unten wird es ermöglicht, das Verschlussteil 1 sehr nahe, parallel zu der Fahrzeugkarosserie 2 zu verschieben und die Tankmulde 5 zu öffnen, um den Tankstutzen 6 für einen Betankungsvorgang zugänglich zu machen.

Die Verlagerung des Verschlussteiles 1 in den Verschieberichtungen 3, 4 wird durch zwei Verschiebeeinrichtungen 10, 20 bewirkt, die jeweils eine Bewegungskomponente der Öffnung- bzw. Schließbewegung des Verschlussteils 1 bewirken. In dem dargestellten Ausführungsbeispiel ist die erste Verschiebeeinrichtung 10 als ein Hubmagnet ausgebildet, der die zweite Verschiebeeinrichtung 20 zusammen mit dem Verschlussteil 1 entlang der ersten Verschieberichtung 3 bewegt. Die Verschiebung durch die erste Verschiebeeinrichtung 10 erfolgt dabei auf einen elektrischen Impuls hin, beispielsweise über eine Fernbedienung oder über ein Bedienelement im Inneren des Fahrgastraumes. Durch die Betätigung des Hubmagnets 10 wird die gesamte zweite Verschiebeeinrichtung 20 mitsamt dem Verschlussteil 1 verlagert, wobei die zweite Verschiebeeinrichtung 20 auf einem Schlitten 27 gleitbar gelagert ist.

Die zweite Verschiebeeinrichtung 20 weist einen Elektromotor 21 auf, der über eine entsprechende Verzahnung die Drehbewegung der Abtriebswelle auf eine Spindel 22 überträgt. Diese Spindel 22 überträgt wiederum die Drehbewegung über eine Gewindepaarung auf eine Hülse 23, die drehfest und längsverschieblich gelagert ist und an der über einen Steg 8 das Verschlussteil 1 befestigt ist. Sowohl die Spindel 22 als auch die Hülse 23 sind in einem Gehäuse 26 gelagert, das über eine Dichtung 7 beweglich an der Tankmulde 5 angeordnet ist. Die Dichtung 7 ist dabei so ausgebildet, dass eine Verlagerung des Gehäuses 26 in der ersten Verschieberichtung 3 in einem ausreichenden Maße möglich ist.

In der Figur 1 ist weiter gezeigt, dass der Hubmagnet 10 über einen Stempel 12 an dem Elektromotor 21 befestigt ist, so dass eine Bewegung sowohl von der nicht dargestellten Fahrzeugkarosserie 2 weg als auch zum Fahrzeug hin in der ersten Bewegungsrichtung 3 eingeleitet werden kann. Um eine aktive Rückwärtsbewegung durch den Hubmagneten 10 zu vermeiden, kann an einem dem Hubmagneten 10 gegenüberliegenden Ende des Motors 21 eine Feder 11 angeordnet sein, die bei Stromlosschalfiung des Hubmagneten 10 automatisch eine Bewegung auf die Fahrzeugkarosserie 2 zu bewirkt, um das Verschlussteil 1 im wesentlichen bündig mit der Fahrzeugkarosserie 2 zu halten. Alternativ zu einem Hubmagneten kann die Verschiebeeinrichtung 10 auch als ein Elektromotor ausgebildet sein, der über eine Gewindeeinrichtung eine Verlagerung der zweiten Verschiebeeinrichtung 20 bewirkt.

Die zweite Verschiebeeinrichtung 20 führt die Bewegung in der zweiten Verschieberichtung 4 dadurch aus, dass der Elektromotor 21 über eine Abtriebswelle 210 mit einer drehbar gelagerten Spindel 22 in Eingriff steht und diese antreibt. An dem oberen Ende der Spindel 22, die alternativ auch als eine biegsame Welle ausgebildet sein kann, die direkt von dem Elektromotor 21 angetrieben wird, ist ein Außengewinde 220 angeordnet, das als ein Bewegungsgewinde ausgebildet ist. Dieses Außengewinde 220 greift in ein Innengewinde 230 der Hülse 23 ein und verursacht eine Längsbewegung der Hülse 23 entsprechend der Drehrichtung der Spindel 22.

Um ein Mitdrehen der Hülse 23 zu vermeiden, ist eine Führung entweder über eine Führungsnut 25 oder eine Führungsfläche 24, wie in den Schnittdarstellungen der Figuren 2a und 2b gezeigt, vorgesehen. Zur Abdichtung der Hülse 23 ist ein O-Ring 9 angeordnet, der verhindert, dass Schmutz oder sonstige Materialien bis zu dem Elektromotor 21 vordringen. Der O-Ring 9 ist in dem Gehäuse 26 in einer entsprechenden Ausnehmung angeordnet. Das Gehäuse 26 ist gegenüber der Tankmulde 5 über eine Dichtung 7 abgedichtet, wobei die Dichtung 7 so ausgebildet ist, dass eine Verschiebebewegung über die Amplitude der ersten Verschiebeeinrichtung 10 möglich ist. Die Führungsnut 25 bzw. die Führungsfläche 24 ist an der Außenseite der Hülse 23 ausgebildet, korrespondierende Führungssteine oder Führungsflächen sind an der Innenseite des Gehäuses 26 ausgebildet. Der Motor 21 zusammen mit der Spindel 22, der Hülse 23 sowie dem Gehäuse 26 sind komplett verschiebbar, so dass dieses als modulare Einheit vorgefertigt werden kann. Das Modul kann um die erste Verschiebeeinrichtung 10 erweitert werden, so dass eine komplette Vorrichtung vormontiert geliefert werden kann.

Wie bereits in Verbindung mit der Figur 1 beschrieben, ist das Verschlussteil 1 über einen Steg 8 starr und beabstandet an der Hülse 23 gelagert, so dass die Fahrzeugkarosserie 2 oder das Außenblech zwischen dem Verschlussteil 1 und der Hülse 23 eintauchen kann.

Alternativ zu einem motorischen Antrieb können die Verschiebeeinrichtungen 10, 20 auch manuell angetrieben werden, beispielsweise über Kurbeln oder Hebel. Statt einer starren Spindel kann der Antrieb über den Elektromotor 21 und eine biegsame Welle erfolgen, um die Längsverschieblichkeit der Hülse 23 zu bewirken.

## Patentansprüche

1. Vorrichtung zum Zugänglichmachen und Verschließen einer Öffnung in einer Fahrzeugkarosserie, insbesondere einer Tankmulde, mit einem Verschlussteil, einer Verschiebeeinrichtung (10) zum Verschieben des Verschlussteiles (1) in einer ersten Verschieberichtung (3) senkrecht zur Fahrzeugkarosserie (2) und einer Verschiebeeinrichtung (20) zum Verschieben des Verschlussteiles (1) in einer zweiten Verschieberichtung (4) parallel zur Fahrzeugkarosserie (2) und senkrecht zur ersten Verschieberichtung (3), wobei das Verschlussteil (1) starr und beabstandet mit einer längsverschieblichen Hülse (23) verbunden ist **dadurch gekennzeichnet, dass** die Hülse (23) in einem Gehäuse (26) gelagert ist, das über eine Dichtung (7) beweglich an der Fahrzeugkarosserie (2) insbesondere an der Tankmulde (5) angeordnet ist.

2. Vorrichtung nach Anspruch 1, **dadurch gekennzeichnet, dass** zwei Verschiebeeinrichtungen (10, 20) vorhanden sind, die als Hubmagnet oder als Elektromotor ausgebildet sind.

3. Vorrichtung nach Anspruch 1 oder 2, **dadurch gekennzeichnet, dass** die zweite Verschiebeeinrichtung (20) als Elektromotor (21) ausgebildet ist, der mit dem Verschlussteil (1) über eine Spindel (22) gekoppelt ist.

4. Vorrichtung nach einem der voranstehenden Ansprüche, **dadurch gekennzeichnet, dass** die zweite Verschiebeeinrichtung (20) mit der ersten Verschiebeeinrichtung (10) gekoppelt ist, so dass die zweite Verschiebeeinrichtung (20) senkrecht zu der Fahrzeugkarosserie (2) bewegt wird.

5. Vorrichtung nach einem der voranstehenden Ansprüche, **dadurch gekennzeichnet, dass** die Verschiebeeinrichtungen (10, 20) zusammen als ein Modul, insbesondere ein gekapseltes Modul ausgebildet sind.

6. Vorrichtung nach einem der voranstehenden Ansprüche, **dadurch gekennzeichnet, dass** das Verschlussteil (1) über eine längsverschiebliche, drehfeste Hülse (23) mit einer drehbar befestigten, insbesondere motorisch angetriebenen Spindel (22) gekoppelt ist.

7. Vorrichtung nach Anspruch 6, **dadurch gekennzeichnet, dass** die Hülse (23) über eine Führungsnut (25) oder eine Führungsfläche (24) an der Außenseite der Hülse (23) drehfest gelagert ist.

8. Vorrichtung nach Anspruch 6 oder 7, **dadurch gekennzeichnet, dass** das Verschlussteil (1) über einen Steg (8) an der Hülse (23) befestigt ist..

9. Vorrichtung nach einem der Ansprüche 3 bis 8, **dadurch gekennzeichnet, dass** die Spindel (22) in einem Gehäuse (26) gelagert ist.

10. Vorrichtung nach Anspruch 9, **dadurch gekennzeichnet, dass** eine Dichtung (7) zwischen der Hülse (23) und dem Gehäuse (26) angeordnet ist.

11. Vorrichtung nach Anspruch 9 oder 10, **dadurch gekennzeichnet, dass** die Hülse (23) in dem Gehäuse (26) geführt ist.

12. Vorrichtung nach einem der voranstehenden Ansprüche, **dadurch gekennzeichnet, dass** die zweite Verschiebeeinrichtung (20) auf einem Schlitten (27) gelagert ist.

## Claims

1. A device for making an opening in a vehicle body accessible and closing it, in particular a filler neck compartment, comprising a closing component, a moving device (10) for moving the closing component (1) in a first moving direction (3) perpendicular to the vehicle body (2), and a moving device (20) for moving the closing component (1) in a second moving direction (4) parallel to the vehicle body (2) and perpendicular to the first moving direction (3), wherein the closing component (1) is connected with a longitudinally movable sleeve (23) in a rigid and offset manner, wherein the sleeve (23) is supported in a housing (26), which is movably disposed at the vehicle body (2), in particular at the filler neck compartment (5) through a seal (7).

2. A device according to claim 1, wherein two moving devices (10, 20) are provided, which are configured as a lifting magnet or as electric motor.

3. A device according to claim 1 or 2, wherein the second moving device (20) is configured as an electric motor (21), which is coupled to the closing component (1) through a spindle (22).

4. A device according to one of the preceding claims, wherein the second moving device (20) is coupled with the first moving device (10), so that the second moving device (20) is moved perpendicular to the vehicle body (2).

5. A device according to one of the preceding claims, wherein the moving devices (10, 20) are provided together as a module, in particular an encapsulate module.

6. A device according to one of the preceding claims, wherein the closing component (1) is coupled through a longitudinally movable torque proof sleeve (23) with a rotatably mounted particularly motor driven spindle (22).

7. A device according to claim 6, wherein the sleeve (23) is supported through a guide groove (25) or a guide surface (24) at the outside of the sleeve (23) torque proof.

8. A device according to claim 6 or 7, wherein the closing component (1) is mounted to the sleeve (23) through a bar (8).

9. A device according to one of the claims 3 through 8, wherein the spindle (22) is supported in a housing (26).

10. A device according to claim 9, wherein a seal (7) is disposed between the sleeve (23) and the housing (26).

11. A device according to claim 9 or 10, wherein the sleeve (23) is guided in the housing (26).

12. A device according to one of the preceding claims, wherein the second moving device (20) is supported on a slide (27).

## Revendications

1. Dispositif pour permettre l'accès à et fermer une ouverture dans la carrosserie d'un véhicule, notamment une cavité de réservoir, comprenant une partie de fermeture, un dispositif de coulissement (10) pour le coulissement de la partie de fermeture (1) dans une première direction de coulissement (3) perpendiculaire à la carrosserie du véhicule (2) et un dispositif de coulissement (20) pour le coulissement de la partie de fermeture (1) dans une seconde direction de coulissement (4) parallèle à la carrosserie du véhicule (2) et perpendiculaire à la première direction de coulissement (3), la partie de fermeture (1) étant reliée de manière rigide et à distance à un manchon coulissant en longueur (23), **caractérisé en ce que** le manchon (23) est logé dans un logement (26) qui est disposé au-dessus d'un joint (7) de manière mobile sur la carrosserie du véhicule (2), notamment sur la cavité de réservoir (5).

2. Dispositif selon la revendication 1, **caractérisé en ce que** deux dispositifs de coulissement (10, 20) qui sont réalisés en tant qu'aimant de levage ou en tant que moteur électrique sont présents.

3. Dispositif selon la revendication 1 ou 2, **caractérisé en ce que** le second dispositif de coulissement (20) est réalisé en tant que moteur électrique (21) qui est accouplé à la partie de fermeture (1) par le biais d'une broche (22).

4. Dispositif selon l'une quelconque des revendications précédentes, **caractérisé en ce que** le second dispositif de coulissement (20) est accouplé au premier dispositif de coulissement (10) de sorte que le second dispositif de coulissement (20) est déplacé perpendiculairement à la carrosserie du véhicule (2).

5. Dispositif selon l'une quelconque des revendications précédentes, **caractérisé en ce que** les dispositifs de coulissement (10, 20) sont réalisés ensemble en tant que module, notamment module encapsulé.

6. Dispositif selon l'une quelconque des revendications précédentes, **caractérisé en ce que** la partie de fermeture (1) est accouplée par le biais d'un manchon fixe en rotation (23), coulissant en longueur, à une broche (22) fixée à rotation, notamment entraînée de manière motorisée.

7. Dispositif selon la revendication 6, **caractérisé en ce que** le manchon (23) est logé de manière fixe en rotation par le biais d'une rainure de guidage (25) ou d'une surface de guidage (24) sur le côté extérieur du manchon (23).

8. Dispositif selon la revendication 6 ou 7, **caractérisé en ce que** la partie de fermeture (1) est fixée au manchon (23) par le biais d'une traverse (8).

9. Dispositif selon l'une quelconque des revendications 3 à 8, **caractérisé en ce que** la broche (22) est logée dans un logement (26).

10. Dispositif selon la revendication 9, **caractérisé en ce qu'**un joint (7) est disposé entre le manchon (23) et le logement (26).

11. Dispositif selon la revendication 9 ou 10, **caractérisé en ce que** le manchon (23) est guidé dans le logement (26).

12. Dispositif selon l'une quelconque des revendications précédentes, **caractérisé en ce que** le second dispositif de coulissement (20) est logé sur un chariot (27).
